# EUROPEAN PATENT APPLICATION

(11) **EP 4 535 840 A1**
(43) Date of publication of application: **09.04.2025**
(21) Application number: 24198688.4
(22) Date of filing: 05.09.2024
(51) Int. Cl.: H04W 4/80, H04W 76/14, H04L 67/14, H04W 8/00, H04W 84/12, H04W 84/18, H04W 88/06

(54) **WIRELESS APPARATUS, COMMUNICATION SYSTEM, COMMUNICATION CONTROL METHOD, AND CARRIER MEANS**

(30) Priority: 02.10.2023 JP 2023171203
(71) Applicant: Ricoh Company, Ltd., Tokyo 143-8555 (JP)
(72) Inventor: ASANUMA, Kohdai, Tokyo, 143-8555 (JP)
(74) Representative: SSM Sandmair

(57) **Abstract**

A wireless apparatus (20) is wirelessly communicable with an information processing apparatus (40) and includes a wireless control unit (27) and a standby control unit (24). The wireless control unit (27) stands by for both a peer-to-peer (P2P) connection and an infrastructure connection from the information processing apparatus (40). The standby control unit (24) causes the wireless control unit (27) to stop standing by for the P2P connection when the wireless control unit (27) is performing the infrastructure connection with the information processing apparatus (40).

## Description

### BACKGROUND

### Technical Field

Embodiments of the present disclosure relate to a wireless apparatus, a communication system, a communication control method, and carrier means.

### Related Art

A wireless communication technique is known that wirelessly transmits, to a display, a screen displayed on, for example, a smartphone or a tablet. One example of the wireless communication technique is Miracast^{™}. With such a wireless communication technique, an information processing apparatus that transmits a video (hereinafter referred to as a source apparatus) and a wireless apparatus that receives the video (hereinafter referred to as a sink apparatus) form a network and communicate with each other.

Some source apparatuses support two communication methods. One communication method is a peer-to-peer (P2P) connection and the other communication method is an infrastructure connection that is established over a network. Japanese Unexamined Patent Application Publication No. 2014-222432 discloses a technique which allows a user to switch between these communication methods. More specifically, this technique accepts an input of a connection standby mode and sets a communication method corresponding to the accepted connection standby mode as a communication standard for an acceptable wireless connection to support multiple mirroring standards at low cost.

With the technique described above, however, a wireless apparatus may be affected by the radio interference caused by standing by for a connection from an information processing apparatus. For example, when the wireless apparatus is connected to one information processing apparatus using one communication method and stands by for a connection from the other information processing apparatus using another communication method, the radio waves of the different communication methods may interfere with each other. The occurrence of the radio interference may decrease the stability of the communication, delay a video being displayed by the wireless apparatus, or cause packet loss of the video.

### SUMMARY

Example embodiments include a wireless apparatus wirelessly communicable with an information processing apparatus and includes a wireless control unit and a standby control unit. The wireless control unit stands by for both a peer-to-peer (P2P) connection and an infrastructure connection from the information processing apparatus. The standby control unit causes the wireless control unit to stop standing by for the P2P connection when the wireless control unit is performing the infrastructure connection with the information processing apparatus.

Example embodiments include a communication system including the wireless apparatus, and the information processing apparatus including a communication unit that performs an infrastructure connection with the wireless apparatus.

Example embodiments include a communication control method performed by a wireless apparatus wirelessly communicable with an information processing apparatus, the communication control method including: standing by for both a peer-to-peer (P2P) connection and an infrastructure connection from the information processing apparatus; and stopping standing by for the P2P connection when performing the infrastructure connection with the information processing apparatus.

Example embodiments include carrier means carrying computer readable code for controlling a computer system to carry out the communication control method.

With the above-described configuration, the influence of the radio interference is reduced, which may be caused by standing by for a connection from an information processing apparatus.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIGS. 1A and 1B are diagrams illustrating an overview of how a display apparatus standing by for connections using multiple communication methods performs control for reducing the influence of radio interference;
FIG. 2 is a diagram illustrating an example system configuration of a communication system;
FIG. 3 is a block diagram illustrating an example hardware configuration of the display apparatus;
FIG. 4 is a block diagram illustrating an example hardware configuration of a terminal apparatus;
FIG. 5 is a functional block diagram illustrating example functional configurations of the terminal apparatus and the display apparatus;
FIG. 6 is a diagram illustrating an example in which one display apparatus displays multiple videos when communicating with multiple terminal apparatuses using different communication methods;
FIG. 7 is a state diagram illustrating an example of a state before the display apparatus and the terminal apparatus are connected to each other;
FIG. 8 is a state diagram illustrating an example of a state after the terminal apparatus has established an infrastructure connection with an access point;
FIG. 9 is a table illustrating a relation between a connection state and whether to stand by for a peer-to-peer (P2P) connection and an infrastructure connection during the connection state;
FIGS. 10A and 10B are diagrams schematically illustrating an example of the relation illustrated in FIG. 9;
FIG. 11 is a flowchart illustrating an example of a connection state of the display apparatus that is connectable to up to two terminal apparatuses simultaneously and a communication method for which the display apparatus is standing by;
FIG. 12 is a table illustrating an example of correspondence information which is set on the display apparatus and indicates the correspondence between the identification information of the access point to be connected to the display apparatus and whether to enable or disable the connection control;
FIG. 13 is a view illustrating an example of a connection control enabling/disabling setting screen, which is displayed by the display apparatus; and
FIGS. 14A and 14B are views illustrating examples of icons representing the standby status of the display apparatus.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A communication system and a communication control method performed by the communication system according to embodiments of the present disclosure are described below with reference to the drawings.
Standing by for Connections Using Multiple Communication Methods and Reducing Influence of Radio Interference

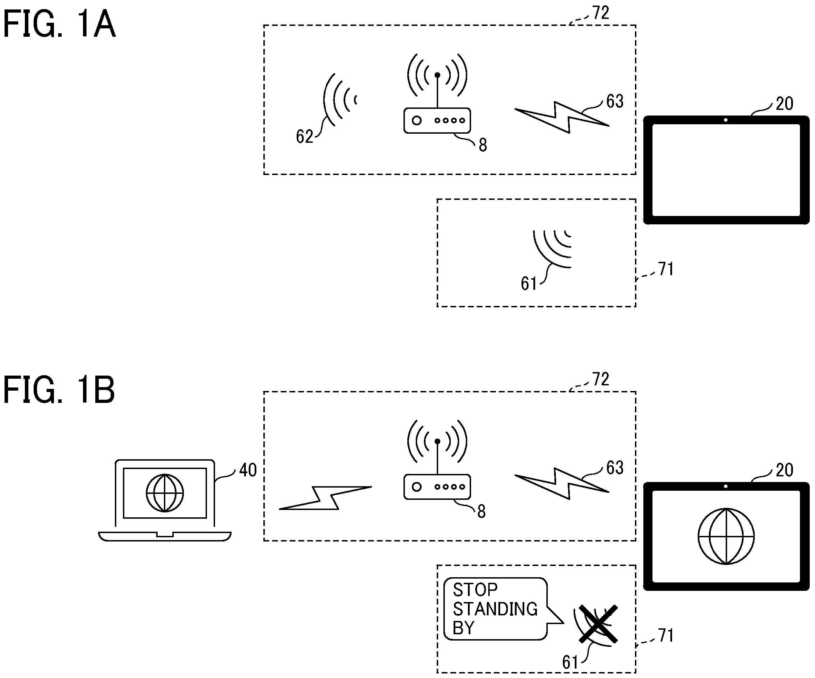

FIGS. 1A and 1B are diagrams illustrating an overview of how a display apparatus standing by for connections using multiple communication methods performs control to reduce the influence of radio interference. As illustrated in FIG. 1A, a display apparatus 20, which is a sink apparatus, supports two communication methods: a peer-to-peer (P2P) connection 71 and an infrastructure connection 72. In the P2P connection 71, the display apparatus 20 directly communicates with a terminal apparatus 40, which is a source apparatus, using a Wi-Fi Direct^{™} technique. In the infrastructure connection 72, the display apparatus 20 performs data communication via an access point 8. Since the terminal apparatus 40 supports these two communication methods, the display apparatus 20 is simultaneously communicable with multiple terminal apparatuses 40 using the different communication methods. In one example, the display apparatus 20 simultaneously displays multiple videos received from multiple terminal apparatuses 40 using the different communication methods.

The display apparatus 20 performs a process of standing by for connections from multiple terminal apparatuses 40 using both communication methods. Specifically, the display apparatus 20 repeatedly transmits beacons 61 and 62 to a surrounding area to scan for nearby apparatuses.

Assume a case where the display apparatus 20 stands by for a P2P connection during an infrastructure connection. In this case, since the display apparatus 20 scans for the terminal apparatus 40 attempting to establish a connection with the display apparatus 20 using the beacon 61, there is a possibility that the radio interference occurs between a radio wave 63, which has a frequency band (2.4 GHz or 5 GHz) used for a connection with the access point 8, and the beacon 61, which has a frequency band similar to that of the radio wave 63. The occurrence of the radio interference may cause unstable communication between the display apparatus 20 and the terminal apparatus 40, resulting in connection interruption, video delays, or missing images.

Accordingly, the display apparatus 20 according to the present embodiment stops standing by for a P2P connection during an infrastructure connection. In FIG. 1B, the terminal apparatus 40 is connected to the display apparatus 20 via the access point 8. Therefore, the display apparatus 20 has stopped standing by for a P2P connection. In other words, the display apparatus 20 has stopped transmitting the beacon 61. Even when the display apparatus 20 has established a P2P connection with one terminal apparatus 40 and an infrastructure connection with another terminal apparatus 40 and then the P2P connection is disconnected, the display apparatus 20 does not stand by for a P2P connection.

This control allows the display apparatus 20 to reduce the influence of the radio interference that would otherwise be caused by standing by for a P2P connection during an infrastructure connection. During an infrastructure connection, the display apparatus 20 stands by for another infrastructure connection since standing by for the other infrastructure connection does not cause the radio interference. During a P2P connection, the display apparatus 20 stands by for another P2P connection since standing by for the other P2P connection is less likely to cause the radio interference. During a P2P connection, the display apparatus 20 stands by for an infrastructure connection. This is because the display apparatus 20 displays a connection setting screen, not a video, while establishing an infrastructure connection with the access point 8. Therefore, even when the radio interference occurs, there is no substantial influence. The connection setting screen refers to a screen where a user sets a service set identifier (SSID) and a password.

### Terminology

The term "P2P connection" refers to a communication method in which computers connected to a network communicate directly with each other. In a P2P connection, each computer is equally privileged and functions equally. In the present embodiment, the term "P2P connection" refers to a communication that is performed without using the access point 8. In the present embodiment, the term "infrastructure connection" refers to a communication method in which computers communicate with each other via the access point 8 and do not communicate directly with each other.

The term "standing by for a connection" means notifying the terminal apparatus 40 to be connected to the display apparatus 20 of the presence of the display apparatus 20, detecting the terminal apparatus 40 to be connected to the display apparatus 20, and responding to, if any, a connection request from the terminal apparatus 40. The term "standing by for a connection" may also mean scanning for nearby apparatuses or transmitting a beacon.

The term "wireless apparatus" refers to an apparatus that is mainly used as a sink apparatus and may or may not have a display for displaying a video received from an information processing apparatus. In the present embodiment, the display apparatus 20 is an example of the wireless apparatus. The term "information processing apparatus" refers to an apparatus that is mainly used as a source apparatus. In the present embodiment, the terminal apparatus 40 is an example of the information processing apparatus.

The term "stopping standing by for a connection" means stopping transmitting a beacon or stopping scanning for nearby apparatuses. However, even after the display apparatus 20 stops transmitting a beacon or scanning for nearby apparatuses, a new connection may still be possible. Stopping transmitting a beacon or stopping scanning for nearby apparatuses does not necessarily mean reducing the strength of the radio wave to zero but may also mean reducing the strength of the radio wave to the extent that a source apparatus cannot detect the radio wave.

### Usage Scene

The display apparatus 20 and the terminal apparatuses 40 together operate as a communication system 100. In an example of a usage scene of the communication system 100, employees may use the terminal apparatuses 40 to display videos on the display apparatus 20 shared by the employees at a meeting held at an office. In this case, the display apparatus 20 simultaneously displays the videos from multiple terminal apparatuses 40.

In another example of the usage scene of the communication system 100, a teacher may use the terminal apparatus 40 and students may use the display apparatuses 20 at school. The teacher gives a lecture while sharing screen data of the terminal apparatus 40 with the display apparatuses 20 used by multiple students. The students may input answers to assignments or questions into the display apparatuses 20 to share the assignments or questions with the teacher. Further, one of the students may enter handwritten data into the display apparatus 20 and share the handwritten data with the terminal apparatus 40 used by the teacher and the display apparatuses 20 used by the other students.

There are more various possible usage scenes. For example, in a meeting, a product briefing, or a presentation, an explainer may use the terminal apparatus 40 to share screen data with participants who use the display apparatuses 20.

The display apparatus 20 may be a portable, thin display apparatus. The display apparatus 20 may include a built-in battery or a battery externally attached to the display apparatus 20. The display apparatus 20 may be plugged into an outlet to receive power therefrom. In one example, the display apparatus 20 may be carried along with the terminal apparatus 40 and connected to the terminal apparatus 40 when used so that the display apparatus 20 is used as an extended display of the terminal apparatus 40.

In one example, a sales representative may use the display apparatus 20 as an extended display to make a presentation at a client site. In another example, the display apparatus 20 may be used as a double display for office work together with the terminal apparatus 40 such as a personal computer (PC). In still another example, when a user has a smartphone for use in locations outside the office, the user may use the display apparatus 20 as an extended display for watching a video or working from home by connecting the display apparatus 20 to the smartphone.

### Example System Configuration

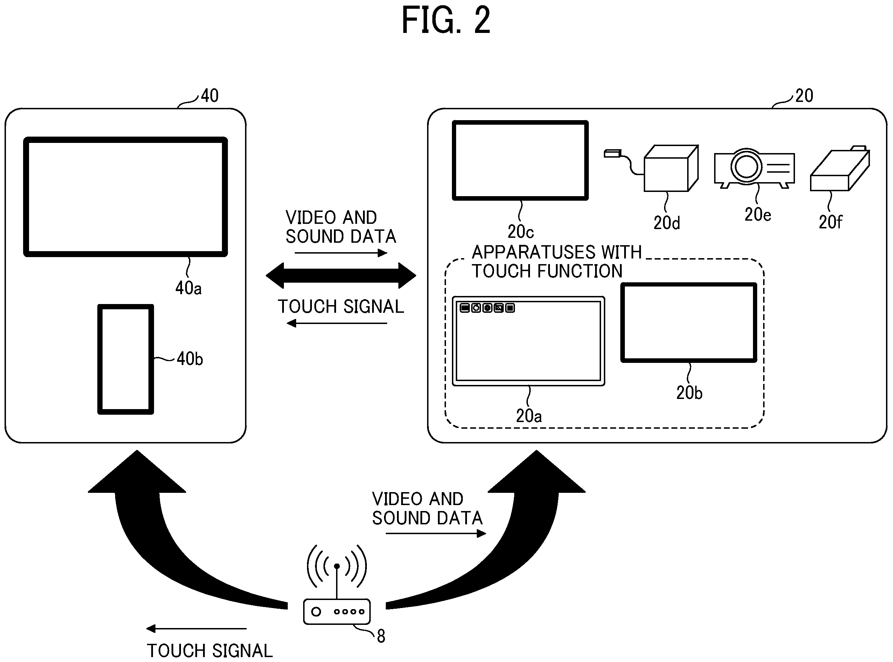

An example system configuration of the communication system 100 is described with reference to FIG. 2. FIG. 2 is a diagram illustrating an example system configuration of the communication system 100. The terminal apparatus 40 and the display apparatus 20 are communicable with each other using at least two wireless communication methods. One communication method is, as described above, a P2P connection (one-to-one communication) such as Wi-Fi Direct^{™} or Bluetooth^{™}. The other communication method is an infrastructure connection via the access point 8 (Wi-Fi^{™} router). The terminal apparatus 40 and the display apparatus 20 may communicate with each other via the same server apparatus. In this case, the terminal apparatus 40 and the display apparatus 20 are associated with the server apparatus, and the server apparatus transmits a video and sound from the terminal apparatus 40 to the display apparatus 20 and transmits a touch signal from the display apparatus 20 to the terminal apparatus 40.

Miracast^{™}, Google Cast^{™}, and Airplay^{™} are examples of communication standards that enable wireless communication between the terminal apparatus 40 and the display apparatus 20. The terminal apparatus 40 and the display apparatus 20 communicate with each other using any of these communication standards or improved communication standards. For example, Miracast^{™} is a display transmission technique defined by the Wi-Fi Alliance and allows one-to-one wireless communication. Miracast^{™} uses a streaming technique that wirelessly transmits an image, sound, or a video from a host (source apparatus) to a paired sink apparatus. Miracast^{™} is a technique that turns a display apparatus that uses a dedicated cable for connection into a wireless display apparatus. Since Miracast^{™} allows such a display apparatus to wirelessly provide functions that have been implemented by a High-Definition Multimedia Interface (HDMI)^{™}, Miracast^{™} is sometimes referred to as "HDMI^{™} over Wi-Fi^{™}."

A P2P connection is suitable in an environment where a direct communication between apparatuses is preferable or where a server apparatus has limited reliability. An infrastructure connection is suitable in an environment where centralized data management or enhanced security is preferable or where a large scale of network is managed. Therefore, these two communication methods serve different purposes. Miracast^{™} supports both P2P and infrastructure methods, while Google cast^{™} basically supports the infrastructure method but not the P2P method. Airplay^{™} supports the P2P method but not the infrastructure method (there is a possibility that these communication standards may support more communication methods in the future). Since an operating system (OS) on a source apparatus supporting each communication standard also varies, the terminal apparatus 40 tends to support both P2P and infrastructure in order to connect with many types of sink apparatuses (the display apparatus 20 in the present embodiment).

Alternatively, the terminal apparatus 40 and the display apparatus 20 may be connected to each other via a wired video output interface such as HDMI^{™}, DisplayPort^{™}, or Thunderbolt^{™}.

Examples of the terminal apparatus 40 include a PC 40a (e.g., a desktop PC or a laptop), a smartphone 40b, and a tablet terminal used by the user. The terminal apparatus 40 executes, for example, an application that supports wireless communication and an application that reproduces a video. The terminal apparatus 40 is an apparatus that is portable by the user, but may be of a stationary type. The terminal apparatus 40 may have a general-purpose configuration and does not need a special hardware or the installation of an application dedicated to the present embodiment. However, installing an application dedicated to the display apparatus 20 according to the present embodiment further enhances the user convenience.

An apparatus such as the terminal apparatus 40 that transmits content (source) to be output is referred to as a source apparatus. A source apparatus does not refer to a specific apparatus, but refers to a source from which content is transmitted. Similarly, an apparatus such as the display apparatus 20 that receives the content to be output is referred to as a sink apparatus. A sink apparatus does not refer to a specific apparatus, but refers to a destination to which the content is transmitted. Therefore, the terminal apparatus 40 may be a sink apparatus and the display apparatus 20 may be a source apparatus.

Examples of the display apparatus 20 include a display 20a, such as a liquid-crystal display or an organic electro-luminescence (EL) display, a PC 20b (with an integrated display), a television (TV) receiver 20c, a set-top box 20d, a projector 20e, and a wireless communication apparatus 20f. The display apparatus 20 has at least a wireless communication function and may further include display means. The display 20a, the PC 20b, the TV receiver 20c, and the projector 20e include display means, while the set-top box 20d and the wireless communication apparatus 20f do not include display means.

The display apparatus 20 (excluding the wireless communication apparatus 20f) may have a built-in wireless communication function or a wireless communication function externally attached to the display apparatus 20. Since the wireless communication apparatus 20f is the wireless communication function itself, the wireless communication apparatus 20f may be externally attached to the display apparatus 20 excluding the wireless communication apparatus 20f. For example, the wireless communication apparatus 20f is connected to a universal serial bus (USB) interface (I/F) of the display 20a, the PC 20b, the TV receiver 20c, the set-top box 20d, and the projector 20e, which do not have the built-in wireless communication function, so that the display 20a, the PC 20b, the TV receiver 20c, the set-top box 20d, and the projector 20e are wirelessly communicable with the terminal apparatus 40. Each of the display 20a, the PC 20b, the TV receiver 20c, the set-top box 20d, and the projector 20e to which the wireless communication apparatus 20f is connected may be referred to as a wireless video display system.

Examples of the set-top box 20d include a cable TV receiver and a satellite broadcasting receiver. Examples of the wireless communication apparatus 20f include apparatuses or stick PCs conforming to Miracast^{™}, Google Cast^{™}, or Airplay^{™}.

The display apparatus 20 is preloaded with an application or a function that supports wireless communication. Alternatively, such an application or function may be installed in the display apparatus 20. Part or all of the functions may be implemented by hardware circuitry.

The display apparatus 20 including display means may include a touch panel. The display apparatus 20 including display means wirelessly transmits a touch signal generated in response to the user touching the display apparatus 20 to the terminal apparatus 40. This enables the user to operate the terminal apparatus 40 on the display apparatus 20.

### Example Hardware Configurations

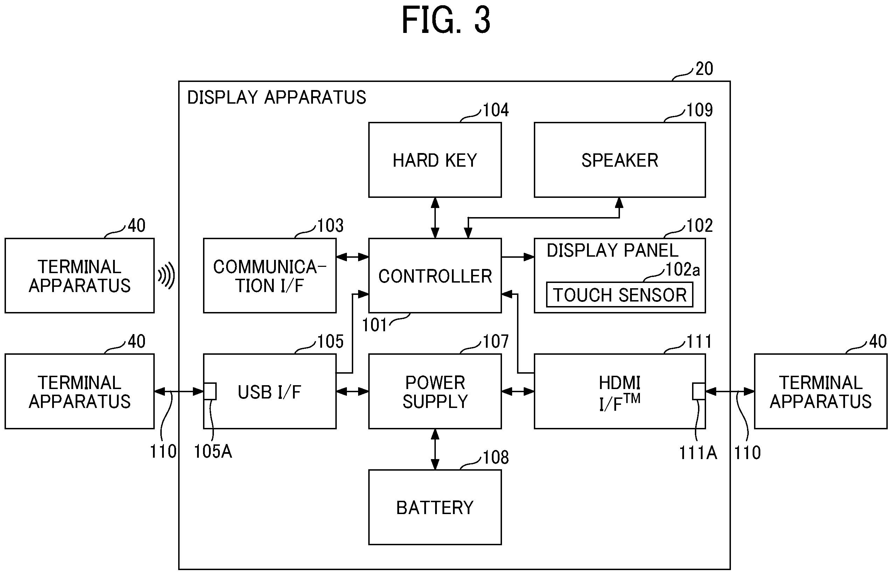

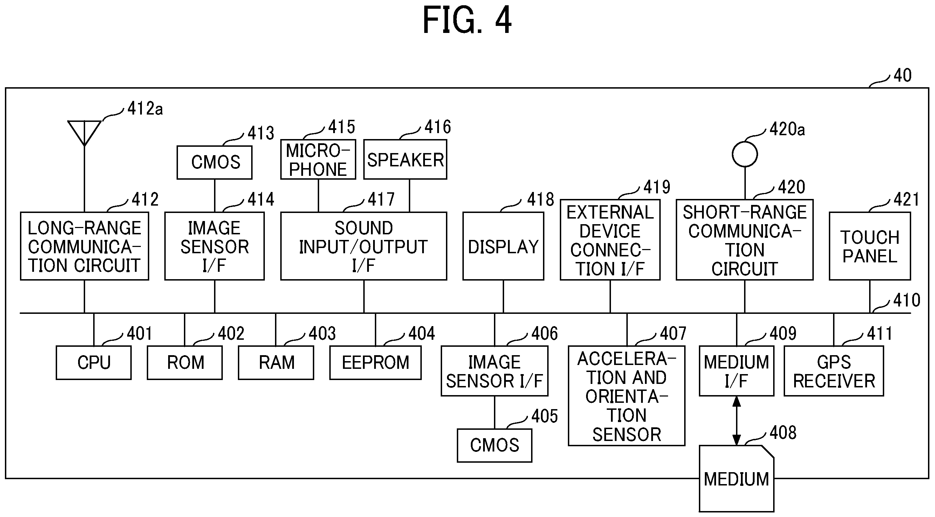

Example hardware configurations of the display apparatus 20 and the terminal apparatus 40 are described below with reference to FIGS. 3 and 4.

### Display Apparatus

FIG. 3 is a block diagram illustrating an example hardware configuration of the display apparatus 20. The display apparatus 20 illustrated in FIG. 3 includes a display panel 102 on the front of a housing of the display apparatus 20. The display apparatus 20 receives a video signal from the terminal apparatus 40 through wireless communication or via a video signal conversion cable 110 to display, on the display panel 102, a video corresponding to the video signal. The display apparatus 20 is a thin, portable display apparatus with a built-in battery 108. Therefore, the display apparatus 20 may be carried along with the terminal apparatus 40 and connected to the terminal apparatus 40 when used so that the display apparatus 20 is used as an extended display of the terminal apparatus 40.

In one example, a sales representative may use the display apparatus 20 as an extended display to make a presentation at a client site. In another example, the display apparatus 20 may be used as a double display for office work together with the terminal apparatus 40 such as a PC. In still another example, when a user has a smartphone for use in locations outside the office, the user may use the display apparatus 20 as an extended display for watching a video or working from home by connecting the display apparatus 20 to the smartphone.

As illustrated in FIG. 3, the display apparatus 20 includes a controller 101, the display panel 102, a communication I/F 103, a user interface (UI) such as a hard key 104, a speaker 109, a USB I/F 105, a power supply 107, and the battery 108.

The controller 101 controls an overall operation of the display apparatus 20. For example, the controller 101 is implemented by a control circuit such as an integrated circuit (IC) including, for example, a central processing unit (CPU), a read-only memory (ROM), and a random-access memory (RAM).

The display panel 102 displays various images (e.g., moving images or still images) corresponding to video signals supplied from the controller 101. For example, the display panel 102 includes a liquid-crystal panel or an organic EL panel. The display panel 102 is overlaid with a touch sensor 102a such that the touch sensor 102a is disposed on a front face of the display panel 102. The speaker 109 outputs various sounds corresponding to sound signals supplied from controller 101.

The communication I/F 103 is an interface for controlling a wireless communication connection and wireless communication with the terminal apparatus 40. The communication I/F 103 is wirelessly connected to the terminal apparatus 40 (e.g., a laptop or a smartphone) to transmit and receive signals such as control signals and video signals to and from the terminal apparatus 40 through wireless communication. The communication I/F 103 uses, for example, Wi-Fi^{™} as a wireless communication standard. The communication I/F 103 supports the communication methods including a P2P connection and an infrastructure connection.

The hard key 104 is an interface for accepting an input from the user in response to the user operating the hard key 104. For example, the display apparatus 20 includes, as the hard key 104, a plurality of buttons disposed on, for example, at least one of a side face and a front face of the housing. These buttons include, for example, a power button, a selection button, a confirmation button, and a back button. However, the hard key 104 is not limited to these buttons. For example, the display apparatus 20 may include, as the hard key 104, a screen mute key that implements a screen mute icon to disable an operation on the screen with the hard key. For example, the display apparatus 20 performs various settings such as power on/off and brightness and contrast in response to the user operating the hard key 104.

The USB I/F 105 is an interface for connecting the terminal apparatus 40 to the display apparatus 20. The USB I/F 105 includes a USB port 105A (an example of "connection means") conforming to the USB standard. The USB port 105A is connected with a USB cable such as the video signal conversion cable 110. Therefore, the USB I/F 105 is connected to the terminal apparatus 40 via the USB cable. In one example, when a terminal (e.g., a laptop or a smartphone) serving as the terminal apparatus 40 is connected to the USB I/F 105, the USB I/F 105 transmits and receives, for example, control signals, video signals, and power to and from the terminal. In another example, when an external power supply serving as the terminal apparatus 40 is connected to the USB I/F 105, the USB I/F 105 receives power supplied from the external power supply.

The display apparatus 20 includes two or more USB I/Fs 105 to connect multiple terminal apparatuses 40 to these USB I/Fs 105, respectively. In the example illustrated in FIG. 3, the display apparatus 20 includes two USB I/Fs 105. However, the number of USB I/Fs 105 is not limited to two. For example, the display apparatus 20 may include three or more USB I/Fs 105.

The power supply 107 performs control to supply drive power to each component of the display apparatus 20. For example, when power is not supplied from the terminal apparatus 40 (e.g., an external power supply or a terminal) or when power supplied from the terminal apparatus 40 (e.g., an external power supply or a terminal) is insufficient, the power supply 107 supplies power stored in the battery 108 to each component of the display apparatus 20. For example, when power is supplied from the terminal apparatus 40 (e.g., an external power supply or a terminal), the power supply 107 supplies the power supplied from the terminal apparatus 40 to each component of the display apparatus 20. For example, the power supply 107 passes through the power supplied from the terminal apparatus 40 (e.g., an external power supply or a terminal) connected to one of the USB I/Fs 105 and supplies the power to the terminal apparatus 40 (e.g., a terminal) connected to the other USB I/F 105.

The battery 108 stores power for driving the display apparatus 20. The battery 108 is any of various rechargeable secondary batteries (e.g., lithium-ion batteries and lithium-polymer batteries). The display apparatus 20 (e.g., the power supply 107) charges the battery 108 with power supplied from the terminal apparatus 40 (e.g., an external power supply or a terminal) connected to the USB I/F 105.

### Terminal Apparatus

FIG. 4 is a block diagram illustrating an example hardware configuration of the terminal apparatus 40. In FIG. 4, a smartphone is used as an example of the terminal apparatus 40. As illustrated in FIG. 4, the terminal apparatus 40 includes a CPU 401, a ROM 402, a RAM 403, an electrically erasable programmable read-only memory (EEPROM) 404, a complementary metal-oxide semiconductor (CMOS) sensor 405, an image sensor I/F 406, an acceleration and orientation sensor 407, a medium I/F 409, and a global positioning system (GPS) receiver 411.

The CPU 401 controls an entire operation of the terminal apparatus 40. The ROM 402 stores a program such as an initial program loader (IPL) to execute the CPU 401. The RAM 403 is used as a work area of the CPU 401.

The EEPROM 404 reads or writes various data such as a program dedicated to the terminal apparatus 40 under the control of the CPU 401.

The CMOS sensor 405 is an example of built-in imaging means that captures an image of a subject (mainly a self-portrait image) and obtains image data under the control of the CPU 401. The CMOS sensor 405 may be imaging means such as a charge-coupled device (CCD) sensor.

The image sensor I/F 406 is a circuit that controls the driving of the CMOS sensor 405. The acceleration and orientation sensor 407 includes various sensors such as an electromagnetic compass that detects geomagnetism, a gyrocompass, and an acceleration sensor.

The medium I/F 409 controls the reading and writing (storing) of data from and to a recording medium 408 such as a flash memory. The GPS receiver 411 receives a GPS signal from a GPS satellite.

The terminal apparatus 40 also includes a long-range communication circuit 412, a CMOS sensor 413, an image sensor I/F 414, a microphone 415, a speaker 416, a sound input/output I/F 417, a display 418, an external device connection I/F 419, a short-range communication circuit 420, an antenna 420a of the short-range communication circuit 420, and a touch panel 421.

The long-range communication circuit 412 is a circuit that communicates with other apparatuses through a wired or wireless network. The long-range communication circuit 412 performs wireless communication using, for example, Wi-Fi^{™}. The long-range communication circuit 412 supports at least one of a P2P connection and an infrastructure connection. The CMOS sensor 413 is an example of built-in imaging means that captures an image of a subject and obtains image data under the control of the CPU 401.

The image sensor I/F 414 is a circuit that controls the driving of the CMOS sensor 413. The microphone 415 is a built-in circuit that converts sound into an electrical signal.

The speaker 416 is a built-in circuit that converts an electrical signal into physical vibration to generate sound such as music or voice. The sound input/output I/F 417 is a circuit that controls the input and output of a sound signal to and from the microphone 415 and the speaker 416 under the control of the CPU 401.

The display 418 is an example of display means such as a liquid-crystal display or an organic EL that displays, for example, an image of a subject and various icons. The external device connection I/F 419 is an interface for connecting various external devices to the terminal apparatus 40.

The short-range communication circuit 420 is a communication circuit conforming to a standard such as near-field communication (NFC) or Bluetooth^{™}. The touch panel 421 is an example of input means that allows the user to operate the terminal apparatus 40 by touching a screen of the display 418.

The terminal apparatus 40 includes a bus line 410. The bus line 410 is, for example, an address bus or data bus that electrically connects each component such as the CPU 401 illustrated in FIG. 4 to each other.

### Functions

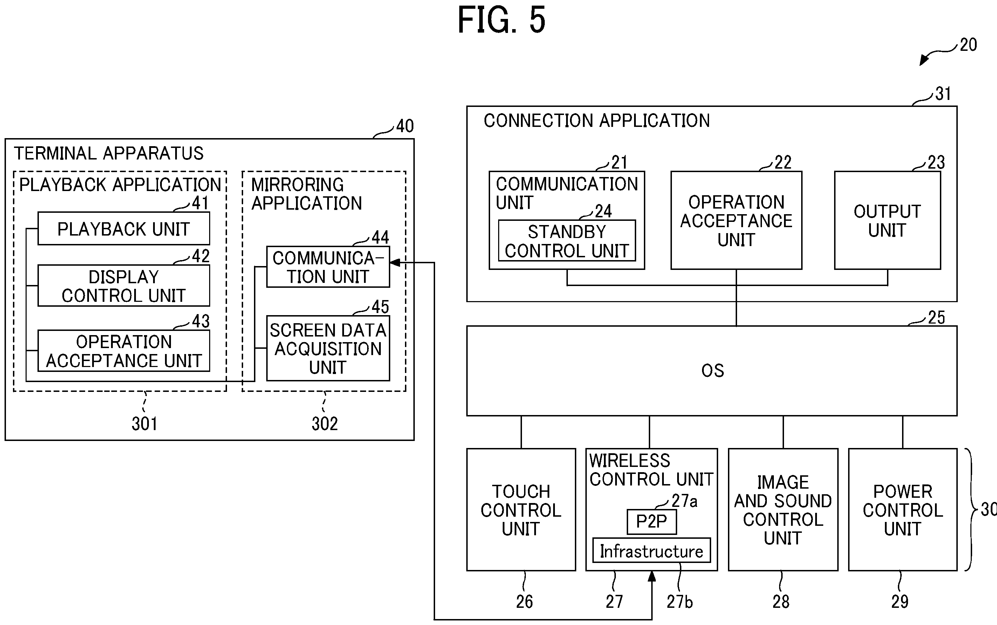

Functions of the terminal apparatus 40 and the display apparatus 20 are described below with reference to FIG. 5. FIG. 5 is a functional block diagram illustrating example functional configurations of the terminal apparatus 40 and the display apparatus 20.

### Terminal Apparatus

The terminal apparatus 40 executes a playback application 301 and a mirroring application 302. The playback application 301 includes a playback unit 41, a display control unit 42, and an operation acceptance unit 43. The mirroring application 302 includes a communication unit 44 and a screen data acquisition unit 45. Each of these functional units of the terminal apparatus 40 is a function or means implemented by the CPU 401 illustrated in FIG. 4 executing an instruction included in one or more programs installed in the terminal apparatus 40. These programs are, for example, the playback application 301 and the mirroring application 302. The playback application 301 is an application that plays back various types of content. However, since the terminal apparatus 40 transmits a screen itself displayed on the display 418, the terminal apparatus 40 does not necessarily include the playback application 301. The mirroring application 302 is an application that obtains (captures) a screen displayed on the display 418 and transmits the captured screen to the display apparatus 20. The playback application 301 and the mirroring application 302 may be an integrated application.

The playback unit 41 decodes or expands video data in a video-specific data format to reconstruct the video into a frame (an image corresponding to one screen). The playback unit 41 changes the resolution of an image in accordance with the resolution of a display panel or interpolates frames.

The display control unit 42 displays each frame generated by the playback unit 41 on the display panel 102. The frame rate at which the display control unit 42 displays a frame may be the same as the rate at which the playback unit 41 plays back a frame. This frame rate may be, for example, 30 frames per second (fps) to 120 fps. In the present embodiment, the frame rate at which the playback unit 41 plays back is not changed. However, for example, when the number of display apparatuses 20 connected to the terminal apparatus 40 exceeds a predetermined number, the frame rate at which the playback unit 41 plays back may be decreased.

The operation acceptance unit 43 accepts a user operation on the playback application 301. For example, the operation acceptance unit 43 accepts an operation relating to the playback of a video, such as starting or stopping the playback of the video, going back or going forward the video by a certain number of seconds, adjusting the sound volume, and adjusting the brightness. The operation acceptance unit 43 also accepts a similar operation in response to a touch signal received by the communication unit 44 from the display apparatus 20.

The screen data acquisition unit 45 obtains (captures), as screen data, the entire or part of the screen displayed on the display 418 at a predetermined speed (times per second). Examples of the screen data obtained by the screen data acquisition unit 45 include a portion of content of the playback application 301, any desired application, and a user-selected area displayed on the screen.

The communication unit 44 repeatedly and wirelessly transmits the screen data acquired by the screen data acquisition unit 45 to the display apparatus 20 over a P2P connection or an infrastructure connection. The speed at which the communication unit 44 transmits the screen data to one display apparatus 20 (the number of screen data transmitted per second) is referred to as a transmission frame rate. The communication unit 44 supports at least one of a P2P connection and an infrastructure connection and transmits the screen data to the display apparatus 20 over a P2P connection or an infrastructure connection.

### Display Apparatus

The display apparatus 20 is described below. The functions of the display apparatus 20 are mainly structured into three layers. Specifically, the three layers include a hardware control layer 30, an operating system (OS) 25, and a wireless connection application 31 in this order from the bottom. Other applications may also run on the OS 25.

The hardware control layer 30 includes a touch control unit 26, a wireless control unit 27, an image and sound control unit 28, and a power control unit 29. Each of these functions of the hardware control layer 30 may be implemented by, for example, a device driver under control of the controller 101.

The touch control unit 26 converts a signal input from the touch sensor 102a into coordinates (X and Y coordinates with the origin, for example, at an upper left corner of the display panel 102) and outputs the coordinates to the OS 25. The touch control unit 26 may further convert the signal into a touched area or a pressure included in the signal and output the converted signal to the OS 25.

The wireless control unit 27 performs, for example, filtering, amplification, demodulation, and analog to digital (A/D) conversion on radio waves of the wireless communication received by the communication I/F 103 to convert the radio waves into digital signals. Then, the wireless control unit 27 decapsulates the digital signals according to a communication protocol and obtains data. The wireless control unit 27 outputs the data to the OS 25. This data includes video data and sound data transmitted from the terminal apparatus 40. The wireless control unit 27 obtains data from the OS 25, encapsulates the data according to the communication protocol, and performs digital to analog (D/A) conversion, modulation, and amplification to convert the data into radio waves. Then, the wireless control unit 27 transmits the radio waves of the wireless communication through the communication I/F 103. This data is a touch signal.

The wireless control unit 27 is means for standing by for a P2P connection and an infrastructure connection. Specifically, the wireless control unit 27 has a P2P connection function 27a and an infrastructure connection function 27b. In one example, the wireless control unit 27 automatically connects to the access point 8 to which the display apparatus 20 has connected in the past in response to the power-on of the display apparatus 20. For any access point 8 to which the display apparatus 20 has not connected in the past, the user sets an SSID and a password on the connection setting screen to allow the wireless control unit 27 to connect to the access point 8 using the SSID and the password. The wireless control unit 27 notifies a communication unit 21 of the connection application 31 of the current connection state (whether the wireless control unit 27 is performing a P2P connection or an infrastructure connection). While standing by for a P2P connection, the P2P connection function 27a periodically transmits the beacon 61 including information such as the SSID of the display apparatus 20. In addition to the SSID, the beacon 61 includes, for example, a beacon transmission interval, channel (frequency) information, a list of supported transfer rates, an encryption method, and a communication method (e.g., the display apparatus 20 is standing by for a Miracast connection and the communication method is a P2P connection or an infrastructure connection). While standing by for an infrastructure connection, the infrastructure connection function 27b similarly transmits the beacon 62 via the access point 8.

The image and sound control unit 28 converts the video data obtained from the OS 25 into a format such as a red-green-blue (RGB) format supported by the display panel 102 and stores the converted data in a video memory included in the image and sound control unit 28. The image and sound control unit 28 applies a voltage to the individual cells of the display panel 102 according to the video data obtained from the video memory. The image and sound control unit 28 generates a differential signal from the sound data obtained from the OS 25, and outputs the differential signal to a positive terminal and a negative terminal of the speaker 109.

The power control unit 29 controls the power supply from the battery or the power supply from the external power supply in accordance with shutdown processing from the OS 25 or the input status of the power switch of the display apparatus 20 or the external power supply. When there is enough power from the external power supply, the power control unit 29 charges the battery. The power control unit 29 manages the amount of the battery. The power control unit 29 stops the power supply to the display panel 102 according to non-operation time and resumes the power supply to the display panel 102 in response to the detection of an operation.

The wireless connection application 31 includes the communication unit 21, an operation acceptance unit 22, and an output unit 23. These functional units included in the wireless connection application 31 provide functions or means implemented by the CPU of the controller 101 illustrated in FIG. 3 executing instructions included in the wireless connection application 31.

The output unit 23 obtains, from the OS 25, at least one of the video data and the sound data received by the wireless control unit 27 from the terminal apparatus 40, and controls the output of the obtained data from the image and sound control unit 28. The output unit 23 requests the OS 25 to display the video data by specifying the arrangement and size of the video data. The image and sound control unit 28 displays the video data obtained from the OS 25 on a source video display layer and outputs the sound data from the speaker 109.

The communication unit 21 controls the wireless control unit 27 to perform each of a P2P connection and an infrastructure connection. In a P2P connection and an infrastructure connection, the communication unit 21 instructs the wireless control unit 27 to start, continue, or end the wireless communication with the terminal apparatus 40. For example, in response to the power-on of the display apparatus 20 or the activation of the wireless connection application 31, the communication unit 21 instructs the wireless control unit 27 to start standing by for a P2P connection and an infrastructure connection (after connecting to the access point 8). The communication unit 21 includes a standby control unit 24. When the wireless control unit 27 is performing an infrastructure connection with the terminal apparatus 40, the standby control unit 24 causes the wireless control unit 27 to stop standing by for a P2P connection. Specifically, when the wireless control unit 27 is performing an infrastructure connection with the terminal apparatus 40 via the access point 8, the standby control unit 24 causes the wireless control unit 27 to stop standing by for a P2P connection. When the wireless control unit 27 is performing an infrastructure connection with the terminal apparatus 40, the standby control unit 24 does not cause the wireless control unit 27 to stop standing by for another infrastructure connection. When the wireless control unit 27 is performing a P2P connection with the terminal apparatus 40, the standby control unit 24 does not cause the wireless control unit 27 to stop standing by for an infrastructure connection. When the wireless control unit 27 is performing a P2P connection with the terminal apparatus 40, the standby control unit 24 does not cause the wireless control unit 27 to stop standing by for another P2P connection.

The operation acceptance unit 22 accepts a touch operation on an icon and a touch operation on a video input from the terminal apparatus 40. When the coordinates of the touched position are in the range of a circumscribed rectangle of the icon, the operation acceptance unit 22 accepts the touch of the icon. When the coordinates of the touched position are not in the range of the circumscribed rectangle of the icon but in a display range of the video, the operation acceptance unit 22 accepts the operation (such as a handwriting input or a button operation) to the terminal apparatus 40.

In the case of the operation to the terminal apparatus 40, the communication unit 21 transmits a touch signal to the terminal apparatus 40. The touch signal in this case is a signal obtained by converting the coordinates of the touched position on the display apparatus 20 into coordinates of the display (video) of the terminal apparatus 40. The converted coordinates are expressed as, for example, a ratio of the X coordinate to the width of the video displayed on the display apparatus 20 and a ratio of the Y coordinate to the height of the video displayed on the display apparatus 20.

### Example of Connection between One Display Apparatus and Multiple Terminal Apparatuses

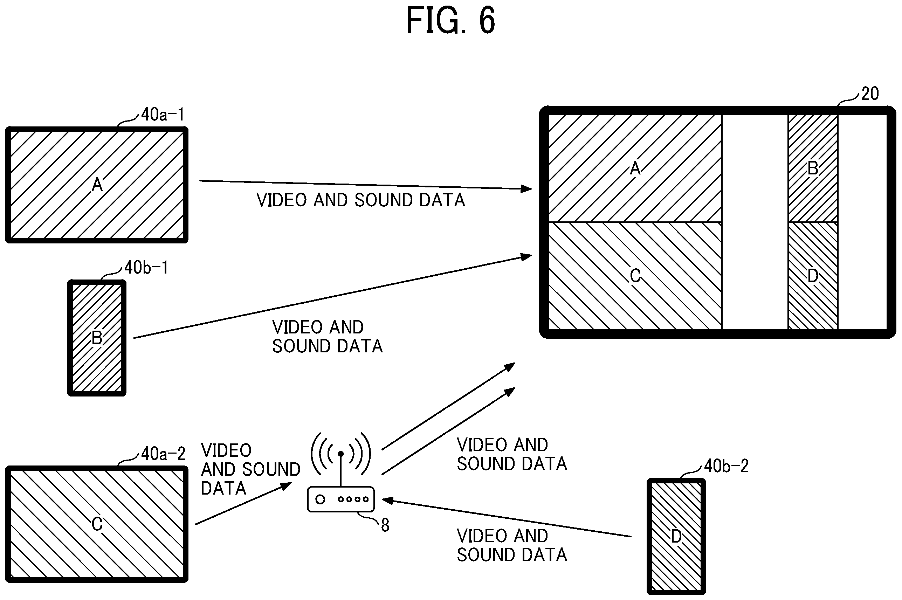

As illustrated in FIG. 6, one display apparatus 20 is connectable to multiple terminal apparatuses 40 using different communication methods. FIG. 6 illustrates an example in which one display apparatus 20 displays multiple videos while communicating with multiple terminal apparatuses 40 using different communication methods. In order for the display apparatus 20 to simultaneously display received multiple videos using different communication methods as illustrated in FIG. 6, the display apparatus 20 establishes a P2P connection with the terminal apparatus 40 that is the first terminal apparatus 40 connected to the display apparatus 20 among the terminal apparatuses 40. This is because, in the present embodiment, when the display apparatus 20 and the first terminal apparatus 40 establish an infrastructure connection, the display apparatus 20 stops standing by for a P2P connection. The order of connections is adjusted according to which communication method the user selects on the terminal apparatus 40 to connect the terminal apparatus 40 to the display apparatus 20.

The display apparatus 20 supports both a P2P connection and an infrastructure connection and simultaneously receives videos from multiple terminal apparatuses 40 using different communication methods. In FIG. 6, a PC 40a-1 and a smartphone 40b-1 are performing a P2P connection with the display apparatus 20, while a PC 40a-2 and a smartphone 40b-2 are performing an infrastructure connection with the display apparatus 20. The display apparatus 20 simultaneously displays videos received from the PC 40a-1, the smartphone 40b-1, the PC 40a-2, and the smartphone 40b-2.

In the present embodiment, when the display apparatus 20 has established an infrastructure connection with the PC 40a-2 or the smartphone 40b-2, the display apparatus 20 stops standing by for a P2P connection. Therefore, as illustrated in FIG. 6, in order for the display apparatus 20 to perform both a P2P connection and an infrastructure connection at the same time, the display apparatus 20 establishes a P2P connection with the PC 40a-1 or the smartphone 40b-1 before establishing an infrastructure connection with the PC 40a-2 or the smartphone 40b-2.

Therefore, in order for the display apparatus 20 to connect to multiple terminal apparatuses 40 as illustrated in FIG. 6, the user connects the PC 40a-1 to the display apparatus 20 over a P2P connection, and then connects the smartphone 40b-1 to the display apparatus 20 over a P2P connection (the PC 40a-1 and the smartphone 40b-1 may be connected to the display apparatus 20 in no particular order). The user then connects the PC 40a-2 to the display apparatus 20 over an infrastructure connection and then connects the smartphone 40b-2 to the display apparatus 20 over an infrastructure connection (the PC 40a-2 and the smartphone 40b-2 may be connected to the display apparatus 20 in no particular order).

The display apparatus 20 according to the present embodiment supports both a P2P connection and an infrastructure connection. This control technique allows the display apparatus 20 according to the present embodiment to simultaneously receive multiple videos from multiple terminal apparatuses 40 using different communication methods.

### Radio Interference and How To Handle Radio Interference

The following describes a case where the display apparatus 20, which supports both a P2P connection and an infrastructure connection and simultaneously receives multiple videos from multiple terminal apparatuses 40 using the different communication methods, is subject to radio interference.

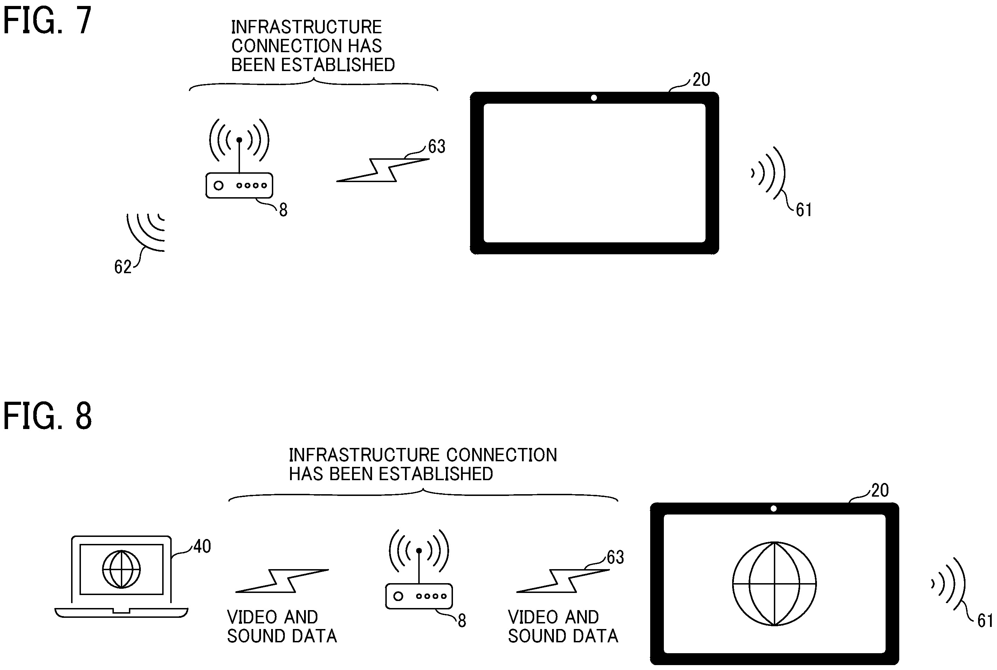

FIG. 7 is a state diagram illustrating an example of a state before the display apparatus 20 and the terminal apparatus 40 are connected to each other. When no terminal apparatus 40 is connected to the display apparatus 20, the display apparatus 20 is connected to the access point 8 but not to the terminal apparatus 40. The display apparatus 20 and the access point 8 are communicating with each other over an infrastructure connection. Since the terminal apparatus 40 has not started transmitting a video, the display apparatus 20 is repeatedly transmitting the beacon 62 via the access point 8 and standing by for a connection from the terminal apparatus 40. At the same time, the display apparatus 20 is also repeatedly transmitting the beacon 61 and standing by for a P2P connection from the terminal apparatus 40. The display apparatus 20 does not necessarily transmit the beacons 61 and 62 strictly simultaneously. For example, the display apparatus 20 may transmit the beacons 61 and 62 alternately.

"Standing by" means repeatedly transmitting the beacons 61 and 62 to detect whether there is any nearby apparatus that is connectable to the display apparatus 20 (the notification of the presence of the display apparatus 20, the detection of any terminal apparatus 40, and a response to a connection request). Repeatedly transmitting the beacons 61 and 62 is also referred to as "scanning" or "searching" for a nearby apparatus. The beacon 61 transmitted over a P2P connection and the beacon 62 transmitted over an infrastructure connection may be the same. However, the beacons 61 and 62 do not need to be exactly the same at the packet level. The beacons 61 and 62 may include, for example, the SSID, the beacon transmission interval, channel (frequency) information, a list of supported transfer rates, an encryption method, and a communication method (e.g., the display apparatus 20 is standing by for a Miracast connection and the communication method is a P2P connection or an infrastructure connection).

FIG. 8 is a state diagram illustrating an example of a state after the terminal apparatus 40 has established an infrastructure connection with the access point 8. After establishing the infrastructure connection, the terminal apparatus 40 transmits a video to the display apparatus 20 via the access point 8, and the display apparatus 20 displays the received video. At this time, while the display apparatus 20 continues to receive video and sound packets via the access point 8, the display apparatus 20 simultaneously performs scanning to recognize any other terminal apparatus 40 that requests a P2P connection.

In this case, since the display apparatus 20 repeatedly transmits the beacon 61, which has a frequency band close to the frequency band of the radio wave 63 used for the connection with the access point 8, to scan for the terminal apparatus 40, there is a possibility that the radio interference between the radio wave 63 and the beacon 61 occurs.

After the display apparatus 20 becomes a group owner, a communication frequency band to be used by the group is determined and shared among the clients in the group, so that the display apparatus 20 does not need to scan multiple frequency bands. This means that the influence of the radio interference caused by standby is small. The group owner indicates an apparatus that provides a function similar to that of the access point 8 in the network between the display apparatus 20 and the terminal apparatus 40. However, the group owner does not mediate a connection to the Internet. The group owner is present in each of a P2P connection and an infrastructure connection. A client indicates an apparatus that is not the group owner. The present embodiment assumes the state in which the display apparatus 20 is being connected to the access point 8. However, until the display apparatus 20 is connected to the access point 8, the display apparatus 20 scans for the access point 8. Therefore, there is a possibility that the radio interference occurs during a P2P connection.

Based on these considerations, while the display apparatus 20 is performing a P2P connection with the terminal apparatus 40, the display apparatus 20 is the group owner. Therefore, the display apparatus 20 does not scan multiple frequency bands for nearby apparatuses to establish a P2P connection and the influence of the radio interference caused by standby is small. When the display apparatus 20 has already established an infrastructure connection with the access point 8, the display apparatus 20 does not scan for the access point 8. Therefore, when the display apparatus 20 is performing a P2P connection with the terminal apparatus 40 while performing an infrastructure connection with the access point 8, the radio interference is less likely to occur even when the display apparatus 20 stands by for an infrastructure connection via the access point 8. Therefore, in this case, the display apparatus 20 does not need to stop standing by for an infrastructure connection.

When the display apparatus 20 is performing a P2P connection with the terminal apparatus 40 while performing an infrastructure connection with the access point 8, the display apparatus 20 is the group owner. After the group owner is determined, the communication frequency band to be used by the group is determined and shared among the clients (since the display apparatus 20 is the group owner, the terminal apparatuses 40 are the clients) in the group. Accordingly, the display apparatus 20 does not need to scan multiple frequency bands and the influence of the radio interference caused by standby is small. Therefore, the display apparatus 20 does not need to stop standing by for another P2P connection.

When the terminal apparatus 40 is transmitting a video to the display apparatus 20 over a P2P connection, the user may, in some cases, perform an operation to cause the display apparatus 20 to establish an infrastructure connection with the access point 8. In this case, since the display apparatus 20 scans for the access point 8, the radio interference with the radio wave of the video being transmitted over the P2P connection may occur. However, in this case, since the display apparatus 20 displays the connection setting screen for the infrastructure connection with the access point 8, the display apparatus 20 does not display the video. Therefore, even when the radio interference occurs, there is no substantial influence. In other words, even when the P2P connection that has already been established between the display apparatus 20 and the terminal apparatus 40 is subjected to the radio interference due to the infrastructure connection with the access point 8, the influence of the radio interference is negligibly small.

When the display apparatus 20 and the terminal apparatus 40 have established an infrastructure connection, the display apparatus 20 is the group owner for the infrastructure connection. Therefore, the display apparatus 20 does not stand by for another infrastructure connection via the access point 8. However, the group owner is not determined for a P2P connection. Therefore, the display apparatus 20 scans for a nearby apparatus over a P2P connection. This causes the radio interference between the radio wave 63 and the beacon 61.

Therefore, in the present embodiment, the display apparatus 20 stops standing by for a P2P connection during an infrastructure connection to reduce the influence of the radio interference. During an infrastructure connection, however, the display apparatus 20 stands by for another infrastructure connection. During a P2P connection, the display apparatus 20 stands by for another P2P connection. During a P2P connection, the display apparatus 20 stands by for an infrastructure connection.

### Enable or Disable Standby for Each Communication Method during Particular Connection State

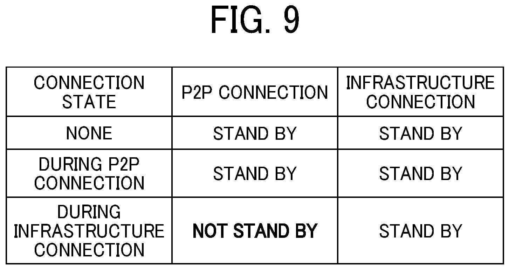

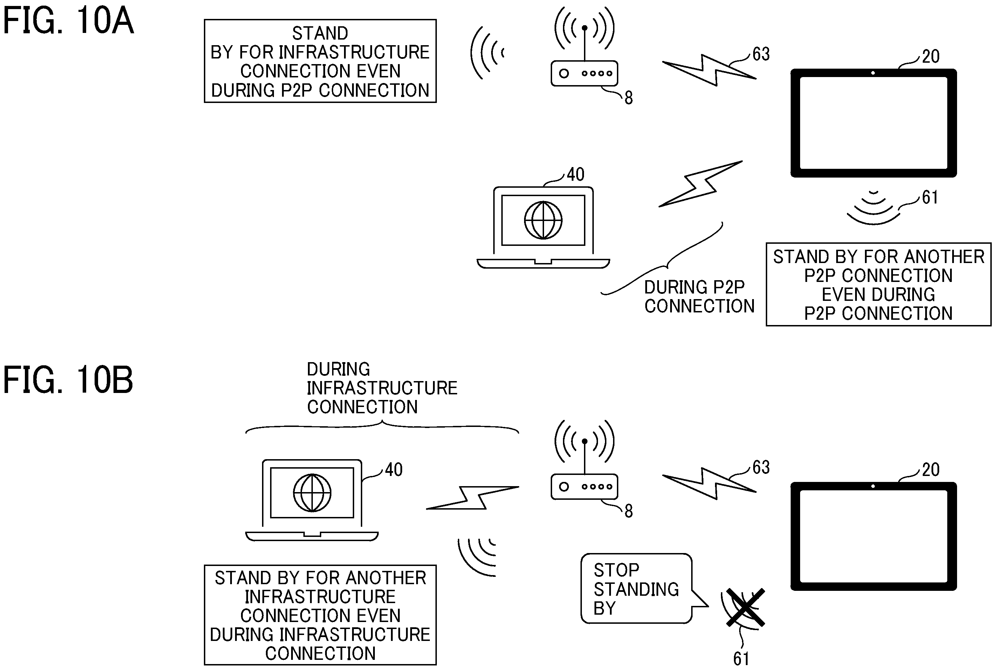

FIG. 9 is a table illustrating a relation between a connection state and whether to stand by for a P2P connection and an infrastructure connection during the connection state. FIGS. 10A and 10B are diagrams schematically illustrating an example of the relation illustrated in FIG. 9. As described above, the influence of the radio interference occurs when the display apparatus 20 stands by for a P2P connection during an infrastructure connection. Therefore, when the display apparatus 20 is not performing an infrastructure connection, the display apparatus 20 keeps standing by for wireless connections from multiple terminal apparatuses 40 as much as possible. With this configuration, the display apparatus 20 does not stand by for a communication method that may cause the radio interference with a communication method being used.
(1) When the connection state is "none," the display apparatus 20 stands by for both a P2P connection and an infrastructure connection.
(2) When the connection state is "during a P2P connection," the display apparatus 20 stands by for both a P2P connection and an infrastructure connection (FIG. 10A).
(3) When the connection state is "during an infrastructure connection," the display apparatus 20 stops standing by for a P2P connection and stands by for an infrastructure connection (FIG. 10B).

In more details, FIG. 10A illustrates a standby state when the display apparatus 20 is performing a P2P connection with the terminal apparatus 40. Since the display apparatus 20 is performing a P2P connection with the terminal apparatus 40, the display apparatus 20 stands by for an infrastructure connection and another P2P connection. FIG. 10B illustrates a standby state when the display apparatus 20 is performing an infrastructure connection with the terminal apparatus 40. Since the display apparatus 20 is performing an infrastructure connection with the terminal apparatus 40, the display apparatus 20 stands by for another infrastructure connection but stops standing by for a P2P connection.

### Processing or Operation

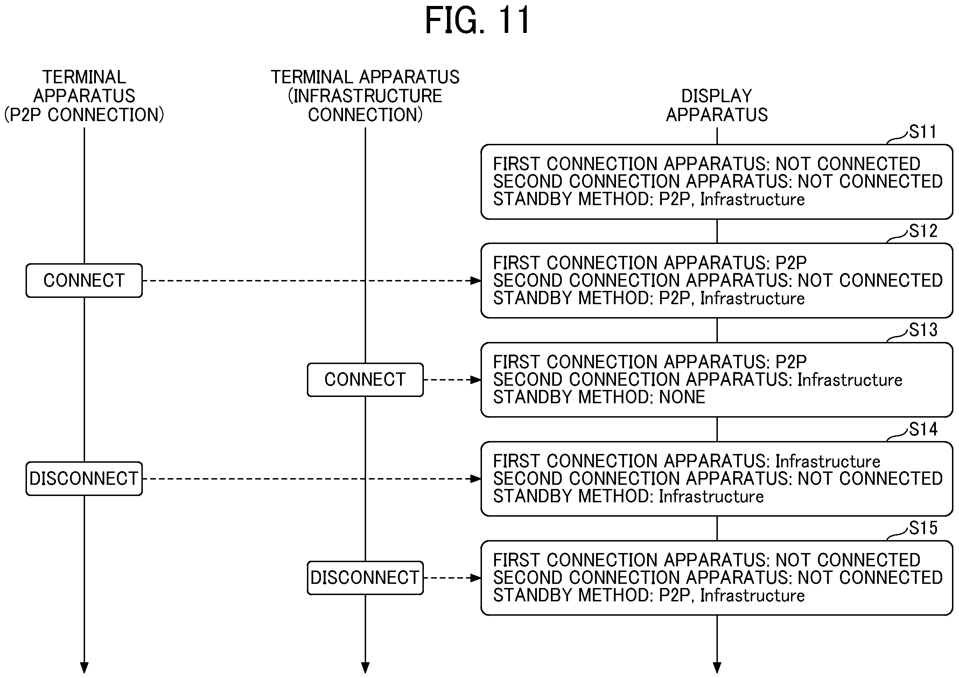

FIG. 11 is a flowchart illustrating an example of a connection state of the display apparatus 20 that is connectable to up to two terminal apparatuses simultaneously and a communication method for which the display apparatus 20 is standing by. It is assumed that the display apparatus 20 has already been connected to the access point 8.

In step S11, for example, the display apparatus 20 starts standing by for a P2P connection and an infrastructure connection in response to the power-on of the display apparatus 20 or the activation of the wireless connection application 31. When no terminal apparatus 40 is connected to the display apparatus 20, the display apparatus 20 stands by for a P2P connection and an infrastructure connection.

In step S12, a terminal apparatus 40 among multiple terminal apparatuses 40 establishes a P2P connection with the display apparatus 20 in response to a user's operation. This terminal apparatus 40 is the first terminal apparatus 40 connected to the display apparatus 20 among multiple terminal apparatuses 40. When the first terminal apparatus 40 has established a P2P connection with the display apparatus 20, the display apparatus 20 stands by for another P2P connection and an infrastructure connection.

In step S13, a terminal apparatus 40 among multiple terminal apparatuses 40 establishes an infrastructure connection with the display apparatus 20 in response to a user's operation. This terminal apparatus 40 is the second terminal apparatus 40 connected to the display apparatus 20 among multiple terminal apparatuses 40. When the second terminal apparatus 40 has established an infrastructure connection with the display apparatus 20, the display apparatus 20 stops standing by for another P2P connection and another infrastructure connection since the maximum number of terminal apparatuses 40 that are connectable to the display apparatus 20 is two.

In step S14, the user disconnects the P2P connection between the first terminal apparatus 40 and the display apparatus 20 by, for example, taking the first terminal apparatus 40 a certain distance away from the display apparatus 20 or performing a disconnection operation on the connection setting screen. After the communication between the first terminal apparatus 40 and the display apparatus 20 over the P2P connection is disconnected, the remaining communication method that is alive is the infrastructure connection. Therefore, the display apparatus 20 starts standing by for another infrastructure connection while continuing to stop standing by for a P2P connection to reduce the influence of the radio interference.

In step S15, the user disconnects the infrastructure connection between the second terminal apparatus 40 and the display apparatus 20 by, for example, taking the second terminal apparatus 40 a certain distance away from the display apparatus 20 or performing a disconnection operation on the connection setting screen. After the communication between the second terminal apparatus 40 and the display apparatus 20 over the infrastructure connection is disconnected, no terminal apparatus 40 is connected to the display apparatus 20. This state is similar to the state in step S11.

The order of connections or disconnections described with reference to the flowchart in FIG. 11 is merely an example, and once the number of connected apparatuses and the connected communication methods are determined, the display apparatus 20 stands by for a connection using any of the standby methods in steps S11 to S15 of FIG. 11. For example, the order of the establishment of a P2P connection and an infrastructure connection may be reversed, and the order of the disconnection of a P2P connection and an infrastructure connection may be reversed.

### Automatic Switching of Enabling/Disabling of Connection Control

Under the connection control according to the present embodiment, it is difficult to establish a P2P connection while the display apparatus 20 is performing an infrastructure connection with the terminal apparatus 40. Therefore, in order to connect multiple terminal apparatuses 40 to the display apparatus 20, the user establishes a P2P connection before an infrastructure connection. The fact that the connection order is determined in this way can be a disadvantage for the user who wants to use both an infrastructure connection and a P2P connection at the same time. Therefore, the connection control according to the present embodiment may be enabled or disabled either automatically or according to the user's selection.

For example, when the display apparatus 20 is connected to the access point 8 in the office, the user may want to use both an infrastructure connection and a P2P connection at the same time. However, when the display apparatus 20 is connected to the access point 8 at home, the user may use an infrastructure connection but not a P2P connection. In this case, the display apparatus 20 automatically enables or disables the connection control based on a pre-set correspondence between the identification information (e.g., the SSID and the MAC address) of the access point 8 to which the display apparatus 20 is connected and whether to enable or disable the connection control. This configuration allows the display apparatus 20 to enable or disable the connection control depending on the use environment.

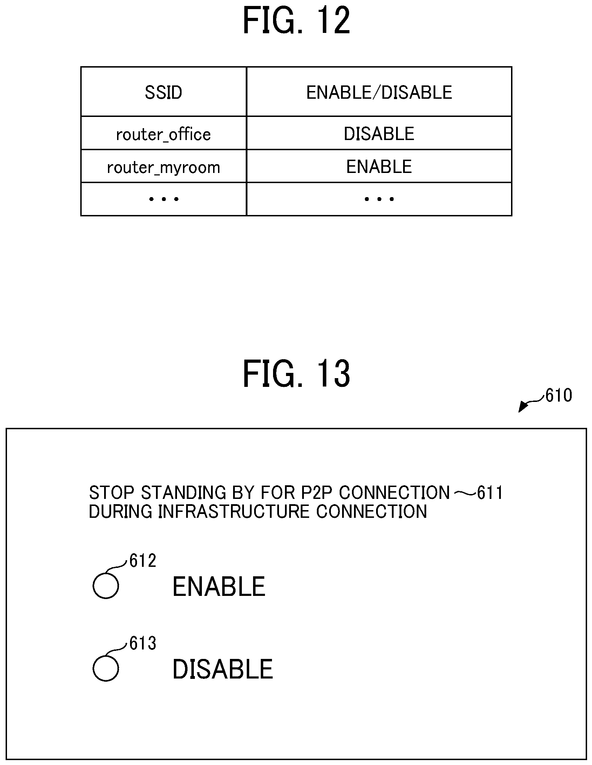

FIG. 12 is a table illustrating an example of correspondence information set on the display apparatus 20. This correspondence information indicates the correspondence between the identification information of the access point 8 to be connected to the display apparatus 20 and whether to enable or disable the connection control. In FIG. 12, the SSID is used as the identification information of the access point 8 as an example. The display apparatus 20 stores this correspondence information, in which the identification information of the access point 8 is set, in a memory such as a RAM (an example of a storage area) included in the controller 101 to perform control of stopping standing by for a P2P connection during an infrastructure connection. When the correspondence information includes the identification information of the access point 8 connected to the display apparatus 20 and the display apparatus 20 is performing an infrastructure connection with the terminal apparatus 40 (information processing apparatus), the standby control unit 24 causes the wireless control unit to stop standing by for a P2P connection.

For example, when the display apparatus 20 has established an infrastructure connection, the standby control unit 24 searches the correspondence information for the SSID of the connected access point 8 and determines, based on the correspondence information, whether to enable or disable the connection control for the SSID that has been found in the search. When the connection control is determined to be "enable," the standby control unit 24 causes the wireless control unit to stop standing by for a P2P connection during the infrastructure connection.

As illustrated in FIG. 13, the user may enable or disable the connection control from a screen. FIG. 13 illustrates a connection control enabling/disabling setting screen 610, which is displayed by the display apparatus 20. The connection control enabling/disabling setting screen 610 includes a message 611 "Stop standing by for P2P connection during infrastructure connection," an "Enable" radio button 612 for enabling the connection control, and a "Disable" radio button 613 for disabling the connection control.

The display apparatus 20 displays the connection control enabling/disabling setting screen 610 as illustrated in FIG. 13. The connection control enabling/disabling setting screen 610 accepts enabling or disabling of the connection control which stops standing by for a P2P connection during an infrastructure connection. When the user checks the radio button 612, the display apparatus 20 operates with the connection control according to the present embodiment enabled. When the user checks the radio button 613, the display apparatus 20 operates with the connection control according to the present embodiment disabled. With the radio button 612 checked, the standby control unit 24 causes the wireless control unit to stop standing by for a P2P connection during an infrastructure connection.

### Current Standby Status

Unless the user recognizes that the display apparatus 20 has stopped standing by for a P2P connection during an infrastructure connection, there is a possibility that the user may attempt to connect the terminal apparatus 40 to the display apparatus 20 over a P2P connection but cannot understand why the terminal apparatus 40 has failed to establish a P2P connection with the display apparatus 20. Therefore, it is desirable that the display apparatus 20 display the current standby status.

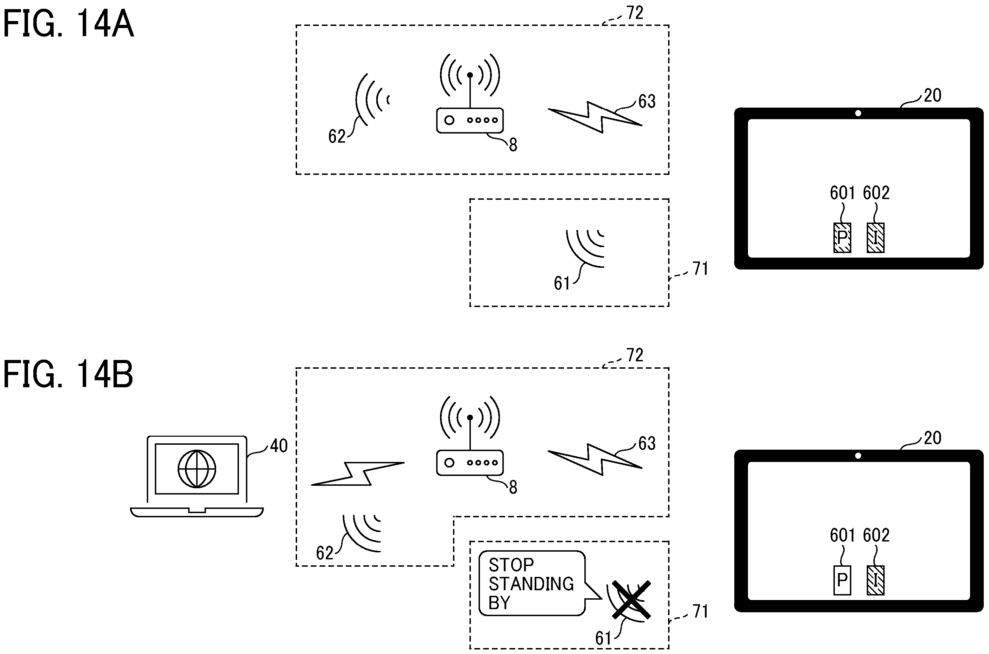

FIGS. 14A and 14B illustrate examples of icons 601 and 602 indicating the standby status of the display apparatus 20. The icon 601 indicates whether the display apparatus 20 is standing by for a P2P connection. The icon 602 indicates whether the display apparatus 20 is standing by for an infrastructure connection. In FIG. 14A, the display apparatus 20 is standing by for an infrastructure connection and a P2P connection. In this state, the icons 601 and 602 are displayed as illustrated in FIG. 14A. Specifically, in FIG. 14A, the icon 601 has a dark (e.g., black) background. This indicates that the display apparatus 20 is standing by for a P2P connection. Similarly, the icon 602 has a dark (e.g., black) background. This means that the display apparatus 20 is standing by for an infrastructure connection.

In FIG. 14B, the display apparatus 20 is not standing by for a P2P connection since the display apparatus 20 has already established an infrastructure connection. In this state, the icons 601 and 602 are displayed as illustrated in FIG. 14B. Specifically, in FIG. 14B, the icon 602 has a dark (e.g., black) background. This means that the display apparatus 20 is standing by for an infrastructure connection. The icon 601 has a bright (e.g., white) background. This means that the display apparatus 20 is not standing by for a P2P connection. In this way, while the standby control unit 24 causes the wireless control unit to stop standing by for a P2P connection during an infrastructure connection with the terminal apparatus 40, the display apparatus 20 displays the icons 601 and 602 to indicate that the display apparatus 20 has stopped standing by for a P2P connection. This configuration allows the user to recognize the current standby status by checking the icons 601 and 602.

The way the icons 601 and 602 are displayed in FIG. 14 is merely an example, and the display apparatus 20 may display an icon for a communication method for which the display apparatus 20 is standing by without displaying an icon for a communication method for which the display apparatus 20 is not standing by. The display apparatus 20 may display the standby status in text.

As described above, the display apparatus 20 according to the present embodiment stops standing by for a P2P connection during an infrastructure connection to reduce the influence of the radio interference that would otherwise be caused by standing by for the P2P connection during the infrastructure connection. During an infrastructure connection, the display apparatus 20 stands by for another infrastructure connection since standing by for the other infrastructure connection during the infrastructure connection does not cause the radio interference. During a P2P connection, the display apparatus 20 stands by for another P2P connection since standing by for the other P2P connection during the P2P connection does not cause the radio interference. During a P2P connection, the display apparatus 20 stands by for an infrastructure connection since the display apparatus 20 displays the connection setting screen while standing by for the infrastructure connection.

In the present embodiment, the display apparatus 20 displays a video. The present embodiment is also suitably applicable to the case where the display apparatus 20 receives and outputs sound but not a video. Further, the present embodiment is suitably applicable to a simple file transmission where no video or sound is transmitted.

In the present embodiment, the display apparatus 20 performs standby control in the same communication standard (a P2P connection and an infrastructure connection). In another embodiment, the display apparatus 20 may perform standby control in different communication standards (Wi-Fi^{™} and Bluetooth^{™}). For example, when the display apparatus 20 is performing an infrastructure connection with the terminal apparatus 40, the display apparatus 20 may stop standing by for a Bluetooth^{™} connection. Alternatively, when the display apparatus 20 is performing an infrastructure connection with the terminal apparatus 40, the display apparatus 20 may stop standing by for a Google cast^{™} connection. Alternatively, when the display apparatus 20 is performing an infrastructure connection with the terminal apparatus 40, the display apparatus 20 may stop standing by for an Airplay^{™} connection.

In the present embodiment, when the display apparatus 20 is performing an infrastructure connection with the terminal apparatus 40, the display apparatus 20 stops standing by for a P2P connection. Instead of stopping standing by for a P2P connection, the display apparatus 20 may reduce the strength of the beacon 61 to reduce the influence of the radio interference. For example, the display apparatus 20 may reduce the strength of the beacon 61 to the extent that the beacon 61 reaches the terminal apparatus 40 located within a distance of 10 centimeters (cm) to 50 cm from the display apparatus 20 to establish a P2P connection with the terminal apparatus 40.

In the present embodiment, the display apparatus 20 is of a portable type. In another embodiment, the display apparatus 20 may be of a stationary type. For example, each user may display a video being displayed on the user's terminal apparatus 40 on a large display apparatus 20 disposed in a conference room. Examples of such a large display apparatus 20 include an electronic blackboard and a digital signage.

The terminal apparatus 40 and the display apparatus 20 may be of the same model. For example, when both the terminal apparatus 40 and the display apparatus 20 are electronic blackboards, the terminal apparatus 40 and the display apparatus 20 may share their screens with each other in a remote conference.

The functional configuration example illustrated in FIG. 5 is divided according to the main functions in order to facilitate understanding of the processing performed by the display apparatus 20. The present disclosure is not limited by how the processing units are divided or by the names of the processing units. The processes performed by the display apparatus 20 may be divided into a greater number of processing units in accordance with the contents of the processes. In addition, a single processing unit may be further divided to include a greater number of processing units.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

The present disclosure provides significant improvements in computer capabilities and functionalities. These improvements allow a user to utilize a computer which provides for more efficient and robust interaction with a table which is a way to store and present information in an information processing apparatus. Moreover, the present disclosure provides for a better user experience through the use of a more efficient, powerful and robust user interface. Such a user interface provides for a better interaction between a human and a machine.

## Claims

1. A wireless apparatus (20) wirelessly communicable with an information processing apparatus (40), the wireless apparatus (20) comprising:
a wireless control unit (27) configured to stand by for both a peer-to-peer (P2P) connection and an infrastructure connection from the information processing apparatus (40); and
a standby control unit (24) configured to cause the wireless control unit (27) to stop standing by for the P2P connection when the wireless control unit (27) is performing the infrastructure connection with the information processing apparatus (40).

2. The wireless apparatus (20) according to claim 1, wherein when the wireless control unit (27) is performing the infrastructure connection with the information processing apparatus (40), the standby control unit (24) causes the wireless control unit (27) to stop standing by for the P2P connection.

3. The wireless apparatus (20) according to claim 1 or 2, wherein when the wireless control unit (27) is performing the infrastructure connection with the information processing apparatus (40), the standby control unit (24) does not cause the wireless control unit (27) to stop standing by for another infrastructure connection.

4. The wireless apparatus (20) according to any one of claims 1 to 3, wherein when the wireless control unit (27) is performing the P2P connection with the information processing apparatus (40), the standby control unit (24) does not cause the wireless control unit (27) to stop standing by for the infrastructure connection.

5. The wireless apparatus (20) according to any one of claims 1 to 4, wherein when the wireless control unit (27) is performing the P2P connection with the information processing apparatus (40), the standby control unit (24) does not cause the wireless control unit (27) to stop standing by for another P2P connection.

6. The wireless apparatus (20) according to any one of claims 1 to 5, further comprising:
a display (102) configured to display a screen that accepts switching between enabling and disabling a control for stopping standing by for the P2P connection during the infrastructure connection,
wherein, when the control is enabled on the screen, the standby control unit (24) causes the wireless control unit (27) to stop standing by for the P2P connection in a case where the wireless control unit (27) is performing the infrastructure connection with the information processing apparatus (40).

7. The wireless apparatus (20) according to any one of claims 1 to 5, further comprising a storage area that stores correspondence information including identification information of an access point for which the standby control unit (24) performs control for stopping standing by for the P2P connection during the infrastructure connection,
wherein when the correspondence information includes the identification information of the access point being connected to the wireless control unit (27) and the wireless control unit (27) is performing the infrastructure connection with the information processing apparatus (40), the standby control unit (24) causes the wireless control unit (27) to stop standing by for the P2P connection.

8. The wireless apparatus (20) according to any one of claims 1 to 7, wherein when the standby control unit (24) causes the wireless control unit (27) to stop standing by for the P2P connection during the infrastructure connection with the information processing apparatus (40), the display (102) displays that the wireless apparatus (20) has stopped standing by for the P2P connection.

9. The wireless apparatus (20) according to any one of claims 1 to 8, wherein the wireless control unit (27) communicates with the information processing apparatus (40) in accordance with a Miracast^{™} communication standard.

10. A communication system (100) comprising:
the wireless apparatus (20) according to any one of claims 1 to 9; and
the information processing apparatus (40) including a communication unit (44) that performs an infrastructure connection with the wireless apparatus (20).

11. A communication control method performed by a wireless apparatus (20) wirelessly communicable with an information processing apparatus (40), the communication control method comprising:
standing (S 11) by for both a peer-to-peer (P2P) connection and an infrastructure connection from the information processing apparatus (40); and
stopping (S14) standing by for the P2P connection when performing the infrastructure connection with the information processing apparatus (40).

12. Carrier means carrying computer readable code for controlling a computer system to carry out the method of claim 11.
